# EUROPEAN PATENT APPLICATION

(11) **EP 3 179 773 A1**
(43) Date of publication of application: **14.06.2017**
(21) Application number: 15306985.1
(22) Date of filing: 11.12.2015
(51) Int. Cl.: H04W 36/00

(54) **METHOD OF DETERMINING A NEIGHBOR CELL LIST**

(71) Applicant: ALCATEL LUCENT, 92100 Boulogne-Billancourt (FR)
(72) Inventor: GACANIN, Haris, 2018 Antwerpen (BE)
(74) Representative: ALU Antw Patent Attorneys

(57) **Abstract**

A method of determining a neighbor cell list for use by a management system in a mobile telecommunication environment comprising a plurality of nodes is described. The method comprises the steps of :
- selecting by a selector one of the plurality of nodes for which the neighbor cell list needs to be determined; and
- collecting by a collector sniffing data from the selected node, comprising detected neighboring nodes of the selected node and associated received signal strength indication values respectively for each one of the detected neighboring nodes; and
- searching by a search engine in the received signal strength indication values an extreme received signal strength indication value being above or equal to a predefined received signal strength indication threshold; and in the event when such extreme signal strength indication value being determined :
- instructing a node being associated to the extreme signal strength indication value, called extreme node, to turn off; and
- repeating the collecting step and the searching step; and

in the event when no such extreme signal strength indication value being determined :
- determining the neighbor list based upon :
a last collected sniffing data comprising last detected neighboring nodes; and
previously determined extreme nodes such as the extreme node.

## Description

### Field of the Invention

The present invention relates to a method of determining a neighbor cell list and a management system to execute such a method in a mobile telecommunication environment with different access nodes.

### Background

Methods to determine a neighbor cell list are know in the art. In order to detect a neighbor cell list for a particular access node in the network an exploring measurement of the environment of the access node is executed. Such measurement is called in the mobile world, sniffing.

Sniffing is a measurement executed by a Network Listening Module or (H)eNB Sniffer of a downlink receiver of a node, of signals from the surrounding nodes. Such measurements might include measurements from macro cells or (H)eNBs in order to obtain useful information for purposes such as interference management or measurement to identify surrounding cell layer i.e. the (H)eNB obtains useful information to identify the layer of its surrounding cells for purposes of mobility handling.

This present application deals with a problem of scalability of sniffing of indoor and outdoor mobile networks such as e.g. eNB and HeNB and the related updating of the neighboring cell list.

It has to be explained, that an E-UTRAN Node B, also known as Evolved Node B, abbreviated as eNodeB or eNB, is the element in E-UTRA of LTE that is the evolution of the element Node B in UTRA of UMTS. It is the hardware that is connected to the mobile phone network that communicates directly with mobile handsets. Traditionally, a Node B has minimum functionality, and is controlled by a Radio Network Controller. However, with an eNB, there is no separate controller element. This simplifies the architecture and allows lower response times. A Home eNodeB, or HeNB, is the 3GPP's term for an LTE femtocell or Small Cell. An eNodeB is an element of an LTE Radio Access Network, or E-UTRAN. A HeNB performs the same function of an eNodeB, but is optimized for deployment for smaller coverage than macro eNodeB, such as indoor premises and public hotspots.

Measurements made by the node of neighbor cells i.e. "sniffing" is used to update its neighbor cell list in order to use such list to set up an appropriate downlink power for its neighbors or to manage hand-over of the user equipment.

The problem becomes clear when considering a situation when two or more nodes are deployed in a close vicinity e.g. two nodes on a same pole. The nodes are producing interference during its sniffing phase if they are not turned off alternatively. Due to close vicinity the sniffing node will be blinded by the closest neighbor in the event when the sniffing is not properly managed. Also, when both nodes are sniffing in the same time, other neighbors will not become visible. The problem becomes more severe as the number of nodes in the network increases. Another scenario is in an enterprise environment where two nodes are placed on different adjacent floors at the same position above/below each other.

Currently, only manual intervention and planning is done to manage the required alternating problem when two or more nodes are closely deployed. Technicians and operation managers must be aware about which nodes are collocated and they manage the network sniffing manually. Also semi-manual approaches are developed where the technician manually turns off the nodes that are deployed in the close vicinity of the sniffing node, which is obviously an approach that is time consuming and not scalable to the number of nodes and expensive.

### Summary

An object of the present invention is to provide a method of determining a neighbor cell list for use by a management system and such a management system that removes the necessity for manual sniffing assistance and that removes the required direct intervention in the field. This solution enables hereby a better search of neighboring nodes. The presented network sniffing in the present method of determining a neighbor cellist can be used in order to remotely determine neighboring nodes even in the case when there are a number of collocated nodes without any human intervention.

According to the invention, this object is achieved due to the fact that the method and management system comprises :
- selecting by a selector one of the plurality of nodes for which the neighbor cell list needs to be determined; and
- collecting by a collector the sniffing data from the selected node, such sniffing data comprises the detected neighboring nodes for the selected node and the associated received signal strength indication values for respectively each one of the detected neighboring nodes; and
- searching by a searcher in the received signal strength indication values for an extreme received signal strength indication value being above or equal to a predefined received signal strength indication threshold; and
   in the event when such extreme signal strength indication value is indeed determined :
- instructing by and instructor the node that is associated to the extreme signal strength indication value, called extreme node, to turn off i.e to switch off or to turn down its transmissions; and also
- repeating the above mentioned collecting step and searching step; and
   Furthermore, in the event when no such extreme signal strength indication value is not determined or is not determined anymore :
- determining the neighbor list based upon :
   a last collected sniffing data that comprises the last detected neighboring nodes; and
   one or more previously determined extreme nodes such as the extreme node.

In this way, a centralized management system collects the sniffing data of a selected node. After reception of the sniffing data of such a sniffing round, a potential extreme node is searched and determined based upon the received signal strength indication signals that were measured during sniffing by the selected node. When an extreme node is still present in the nodes list, it will be requested by the management system to shut down. Hereafter, the management system collects again the sniffing data of a following sniffing round whereby other neighbors which were previously not detected by the selected node since the extreme node overwhelmed their transmitted signals, might pop up. In the event when no received signal strength indication value exceeds the predefined threshold anymore, the actual associated list of nodes together with the previously detected one or more extreme nodes forms the new neighbor cell list for the selected node.

Another characteristic feature of the present invention is that the method further comprises a step of instructing the selected node to update its neighbor cell list with the newly determined neighbor cell list.

Furthermore, the method might comprises that the plurality of nodes comprises a mix of Evolved Node B's and Home Evolved Node B's such as described above.

In order to re-activate the one or more extreme nodes that were shut down during execution of the principle method, the method might comprise a step of instructing the previously determined extreme nodes to turn on again.

Alternatively the principle method might comprise that the step of instructing the extreme node to turn off in fact comprises instructing the extreme node to turn off for only a predetermined period in time. Herby the explicit reactivation will not be required anymore.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

### Brief Description of the Figures

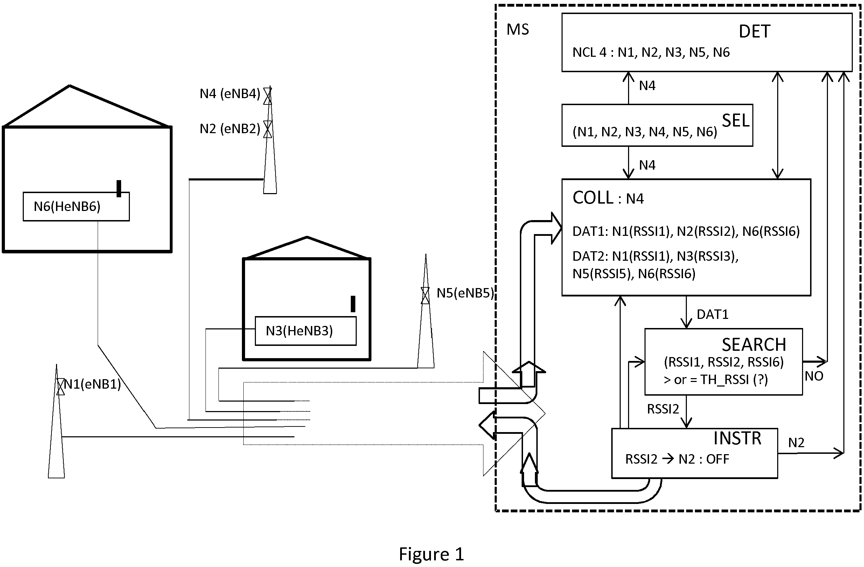

The above and other objects and features of the invention will become more apparent and the invention itself will be best understood by referring to the following description of an embodiment taken in conjunction with the accompanying drawings wherein Figure 1 represents a mobile telecommunications environment comprising a plurality of nodes and the management system of the present invention.

The working of the management system according to the present invention in accordance with its telecommunication environment that is shown in Figure 1 will be explained by means of a functional description of the different blocks shown therein. Based on this description, the practical implementation of the blocks will be obvious to a person skilled in the art and will therefor not be described in details. In addition, the principle working of the method of determining a neighbor cell list will be described in further detail.

### Description of Embodiments

Referring to Figure 1 a mobile telecommunication is shown. The telecommunication environment comprises mobile nodes being a mix of Evolved Node B's i.e. eNB's and Home Evolved Node B's HeNB's :
Node 1 : N1(eNB1)
Node 2 : N2(eNB2)
Node 3 : N3(HeNB3)
Node 4 : N4(eNB4)
Node 5 : N5(eNB5)
Node 6 : N6(HeNB6)

Each node is coupled via the IP network to the Management System MS of the present application.

The Management System comprises a collector COLL being coupled to an input/output interface of the Management system MS. The collector COLL is also coupled to a selector SEL, to a determiner DET, to a Searcher SERACH and to an instructor INSTR of the Management system MS.

The selector SEL is also coupled to the determiner DET.

The Determiner DET is also coupled to the Searcher SEARCH and to the instructor INSTR which are also coupled to each other.

The selector SEL is included to select one of the plurality of nodes e.g. N4 for which the neighbor cell list NCL4 needs to be determined.

The collector COLL is included to collect sniffing data e.g. DAT1 from the selected node N4. The sniffing data comprises detected neighboring nodes e.g. DAT1: N1, N2, N6 of the selected node N4 and comprises associated received signal strength indication values

DAT1: N1(RSSI1), N2(RSSI2), N6(RSSI6) respectively for each one of the detected neighboring nodes.

The searching engine SEARCH is included to search in the received signal strength indication values RSSI1, RSSI2 and RSSI6 an extreme received signal strength indication value being above or equal to a predefined received signal strength indication threshold Th_RSSI.

In the event when such extreme signal strength indication value e.g. RSSI2 is indeed determined, the instructor INSTR is included to instruct, the following functional blocks :
- a node N2 being associated to the extreme signal strength indication value RSSI2, called extreme node N2, for turning off; and
- said collector (COLL) for repeating its collecting; and
- said searcher (SEARCH) for repeating its searching; and

The determiner DET is included to determine, in the event when no such extreme signal strength indication value being determined, the neighbor list NCL4 based upon :
- a last collected sniffing data e.g. DAT2 comprising last detected neighboring nodes e.g. DAT2: N1, N3, N5, N6; and previously determined extreme nodes such as the extreme node N2.

Collecting the sniffing data such as DAT1 or DAT2 can be performed by the collector COLL of the management system either over the radio access layer for the eNB's from the radio access network i.e. this can for instance be realized by filtering from the traffic in the radio access the management signals or by executing measurements on the traffic in the radio access network; or over the femto layer for the HeNB's from the femto access network i.e. this can for instance be realized by filtering from the traffic in the femto access the management signals or by executing measurements on the traffic in the femto access network being supported by the TR-069-based family protocols such as TR-069, TR98 and TR196 CWMP - Customer Premises equipment (CPE) Wide Area Network (WAN) Management Protocol (CWMP).

Also other protocols such as Simple Network Management Protocol SNMP i.e. an Internet-standard protocol for collecting and organizing information about managed devices on IP networks; or the File Transfer Protocol FTP being a standard network protocol used to transfer computer files from one host to another host over the Internet and which is built on a client-server architecture and uses separate control and data connections between the client and the server, can be used.

The different steps will now be described in further details :
- selecting by the selector SEL one of the plurality of nodes e.g. N4 for which the neighbor cell list NCL4 needs to be determined. The The starting sniffing node may be selected by an algorithm or manually by the operator technician based on predefined sniffing pattern. The network can e.g. be divided into clusters of nodes and the selected sniffing node is selected out of one of the clusters. The selector SEL informs hereby also the collector COLL that the method is executed for N4.
- collecting sniffing data e.g. DAT1 from the selected node N4, comprising detected neighboring nodes DAT1: N1, N2, N6 of the selected node N4 and associated received signal strength indication values DAT1: N1(RSSI1), N2(RSSI2), N6(RSSI6) respectively for each one of the detected neighboring nodes. The collector COLL of the Management System MS initiates the measurements by the selected node N4 i.e. sniffing of the sniffing data for neighbor detection and identification; and collects the sniffing data from the selected node N4 over the IP network to the management system MS. The sniffing data comprises :
   DAT1: N1(RSSI1), N2(RSSI2), N6(RSSI6).

The collected data DAT1 is provided to the searcher SEARCH.
- searching in the received signal strength indication values RSSI1, RSSI2 and RSSI6 for an extreme received signal strength indication value being above or equal to a predefined received signal strength indication threshold Th_RSSI. This step can be realized by sorting the collected received signal power level's and by comparing the highest values with the predefined received signal strength indication threshold Th_RSSI. The predefined received signal strength indication threshold Th_RSSI can be predetermined based upon average received signals power strengths or based upon allowed output power of the (Home)eNB's. In the event when a single strong signal is found, while a number of nodes is expected in the neighborhood, the instructor INSTR is triggered. It is remarked here that the first sniffing data DAT1 comprises only measurement for the nodes N1, N2 and N6. The DAT1 doesn't include any sniffing data for e.g. N3 nor for N5. Because of the strong RSSI2 of node N2, the selected node N4 is not able to observe N3 and N5. The RSSI's of N3 and N5 are to weak to overcome the strong RSSI2 of N2.

So, in the event when such extreme signal strength indication value RSSI2 is determined, the searcher SEARCH informs the instructor INSTR accordingly and the following steps are executed :
- instructing by the instructor INSTR the node N2 being associated to the extreme signal strength indication value RSSI2, called extreme node N2, to turn off i.e. to switch down; and
- instructing the collector COLL and the searcher SEARCH to repeat the collecting step and the searching step. In this way the node N2 with strong detected power is turned off and the sniffing by the selected node, the collecting by the collector COLL and the searching by the searcher SERCH are executed again. It has to be remarked here that more than one so called extreme node can be found after a sniffing round whereby the instructor INSTR instructs to more than one node to switch off.

The different instructions are shown by means of arrows towards the node N4, the collector COLL and the Searcher SEARCH.

The steps of collecting, searching and instructing are repeated as long as the searcher SEARCH can find extreme nodes. During each round of sniffing, at least one additional extreme node is turned off whereby additional nodes might become visible. In this way the collection of DAT2 reveals node N3 and N5 :
DAT2 : N1(RSSI1), N3(RSSI3), N5(RSSI5), N6(RSSI6)

The nodes N3 and N5 are now detected by the selected node N2 and its measurement are forwarded to the collector COLL of the Management System MS.

Presume now that in the second collected sniffing data DAT2 no extreme RSSI's are found anymore i.e. in the event when no extreme signal strength indication value being determined anymore :
- determining the neighbor list NCL4 based upon :
   the last collected sniffing data i.e. DAT2 comprising last detected neighboring nodes N1, N3, N5, N6; and
   previously determined extreme nodes such as the extreme node N2.

The newly neighbor cell list NCL4 for N4 is based upon N1, N3, N5, N6 and N2 and becomes : NCL4: N1, N2, N3, N5, N6.

Indeed, the searcher SEARCH informs the determiner DET that building up of the new NCL can start since no extreme RSSI is found anymore. The muted node N2 was previously forwarded by the instructor INSTR to the determiner DET and the determiner DET also retrieves the last collected neighboring nodes from the collector COLL and determines the new NCL list NCL4.

An additional step can be included which is instructing the selected node N4 to update its neighbor cell list with the newly determined neighbor cell list NCL4.

The previously determined extreme node N4 can be instructed to be turned on again. Alternatively, the step of instructing the extreme node N2 to turn off might comprise instructing the extreme node N2 to turn off for only a predetermined period in time whereby the reactivation of N2 will be done automatically.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method of determining a neighbor cell list (NCL) for use by a management system (MS) in a mobile telecommunication environment comprising a plurality of nodes (N1, N2, N3, N4, N5, N6), **characterized in that** said method comprises the steps of :
- selecting one of said plurality of nodes (N4) for which said neighbor cell list (NCL4) needs to be determined; and
- collecting sniffing data (DAT1) from said selected node (N4), comprising detected neighboring nodes (N1, N2, N6) of said selected node (N4) and associated received signal strength indication values (RSSI1, RSSI2, RSSI6) respectively for each one of said detected neighboring nodes; and
- searching in said received signal strength indication values (RSSI1, RSSI2, RSSI6) an extreme received signal strength indication value being above or equal to a predefined received signal strength indication threshold (Th_RSSI); and
in the event when such extreme signal strength indication value (RSSI2) being determined :
- instructing a node (N2) being associated to said extreme signal strength indication value (RSSI2), called extreme node (N2), to turn off; and
- repeating said collecting step and said searching step; and
in the event when no such extreme signal strength indication value being determined :
- determining said neighbor list (NCL4) based upon :
a last collected sniffing data (DAT2) comprising last detected neighboring nodes (N1, N3, N5, N6); and
previously determined extreme nodes such as said extreme node (N2).

2. The method according to claim 1, **characterized in that** said method further comprises a step of :
- instructing said selected node (N4) to update its neighbor cell list with said determined neighbor cell list.

3. The method according to claim 1, **characterized in that** said plurality of nodes (N1, N2, N3, N4, N5, N6) comprises Evolved Node B's and Home Evolved Node B's.

4. The method according to claim 1, **characterized in that** said method further comprises a step of :
- instructing said previously determined extreme nodes to turn on again.

5. The method according to claim 1, **characterized in that** said step of instructing said extreme node (N2) to turn off comprises instructing said extreme node (N2) to turn off for a predetermined period in time.

6. A management system (MS) for determining a neighbor cell list (NCL4) in a mobile telecommunication environment comprising a plurality of nodes (N1, N2, N3, N4, N5, N6), **characterized in that** said management system comprises :
- a selector (SEL) to select one of said plurality of nodes (N4) for which said neighbor cell list (NCL4) needs to be determined; and
- a collector (COLL) to collect sniffing data (DAT1) from said selected node (N4), comprising detected neighboring nodes (N1, N2, N6) of said selected node (N4) and associated received signal strength indication values (RSSI1, RSSI2, RSSI6) respectively for each one of said detected neighboring nodes; and
- a searcher (SEARCH) to search in said received signal strength indication values (RSSI1, RSSI2, RSSI6) an extreme received signal strength indication value being above or equal to a predefined received signal strength indication threshold (Th_RSSI); and
- an instructor (INSTR) to instruct, in the event when such extreme signal strength indication value (RSSI2) being determined :
- a node (N2) being associated to said extreme signal strength indication value (RSSI2), called extreme node (N2), to turn off; and
- said collector (COLL) to repeat to collect; and
- said searcher (SEARCH) to repeat to search; and
- a determiner (DET) to determine, in the event when no such extreme signal strength indication value being determined, said neighbor list (NCL4) based upon :
- a last collected sniffing data (DAT2) comprising last detected neighboring nodes (N1, N3, N5, N6); and
- previously determined extreme nodes such as said extreme node (N2).
